(19) Europäisches Patentamt
European Patent Office
Office européen des brevets

(11) Veröffentlichungsnummer: **0 066 179**
**A1**

(12) # EUROPÄISCHE PATENTANMELDUNG

(21) Anmeldenummer: **82104339.5**

(22) Anmeldetag: **18.05.82**

(51) Int. Cl.³: **C 08 G 65/28**
C 08 G 65/32

(30) Priorität: **03.06.81 DE 3121929**

(43) Veröffentlichungstag der Anmeldung:
**08.12.82 Patentblatt 82/49**

(84) Benannte Vertragsstaaten:
**BE DE FR GB IT NL**

(71) Anmelder: **Th. Goldschmidt AG**
**Goldschmidtstrasse 100**
**D-4300 Essen(DE)**

(72) Erfinder: **Fock, Jürgen, Dr.**
**Mörsenbroicher Weg 114**
**D-4000 Düsseldorf 30(DE)**

(72) Erfinder: **Kollmeier, Hans-Joachim, Dr.**
**Barkhorstrücken 27**
**D-4300 Essen(DE)**

(54) **Verfahren zur Herstellung von Polyoxyalkylenmonoallyl- oder -methallylethern.**

(57) Die Erfindung betrifft ein Verfahren zur Herstellung von Polyoxyalkylenmonoallyl- oder -methallylethern der allgemeinen Formel

$$R^1O-[C_nH_{2n}O-]_xCH_2\overset{\overset{\large R^2}{|}}{C}=CH_2$$

wobei
- $R^1$ ein Alkylrest mit 1 bis 4 Kohlenstoffatomen, ein Arylrest oder ein Alkarylrest,
- $R^2$ ein Wasserstoff- oder Methylrest,
- n eine beliebige Zahl von 2 bis 3 und
- x eine ganze Zahl ist,

mit enger Molekulargewichtsverteilung, wobei man zunächst Polyoxyalkylenether der Formel $R^1O-[C_nH_{2n}O-]_xM$ durch stöchiometrische Polymerisation von Alkylenoxiden oder deren Gemischen der allgemeinen Formel $C_nH_{2n}O$ an Alkalialkoholate der allgemeinen Formel $MOR^1$, wobei M ein Alkalikation ist, bei Temperaturen von 60 bis 130°C, herstellt und dann dieses Zwischenprodukt mit einem Allyl- oder Methallylhalogenid in an sich bekannter Weise umsetzt und das Verfahrensprodukt von dem als Nebenprodukt gebildeten Salz MX abtrennt.

Die Verbindungen sind weitgehend frei von Propenyl- bzw. Butenylgruppen und weisen je Molekül im wesentlichen nur eine Allyl- bzw. Methallyloxidgruppe auf. Die erfindungsgemäß hergestellten Produkte sind reaktive Polyether, welche an Verbindungen mit addierbarem Wasserstoff angelagert werden können.

EP 0 066 179 A1

Th. G o l d s c h m i d t AG, Essen

Verfahren zur Herstellung von Polyoxyalkylenmonoallyl- oder -methallylethern

Die Erfindung betrifft ein Verfahren zur Herstellung von Polyoxyalkylenmonoallyl- oder -methallylethern der allgemeinen Formel

$$R^1O-[C_nH_{2n}O-]_xCH_2\overset{\overset{\displaystyle R^2}{|}}{C}=CH_2 \qquad \text{I}$$

wobei $R^1$ ein Alkylrest mit 1 bis 4 Kohlenstoffatomen, ein Arylrest oder ein Alkarylrest,
$R^2$ ein Wasserstoff- oder Methylrest,
n eine beliebige Zahl von 2 bis 3 und
x eine ganze Zahl ist,
mit enger Molekulargewichtsverteilung.

Polyoxyalkylenether, welche als Endgruppe eine Allyl- oder Methallylgruppe aufweisen, sind reaktive Polyether, welche an geeignete Verbindungen mit addierbarem Wasserstoff angelagert werden können. Diese Verbindungen sind insbesondere als Reaktionspartner für SiH-Gruppen enthaltende Polysiloxane zur Herstellung hydrolysestabiler, grenzflächenaktiver Verbindungen bekanntgeworden. Diese Verbindungen werden z.B. bei der Herstellung von Polyurethanschäumen verwendet.

Es ist bekannt, daß bei der Anlagerung von Alkylenoxid an Allylalkohol, insbesondere bei hohem Alkaligehalt und höherer Temperatur, ein Teil der Allylgruppen in Propenylgruppen, bzw. der Methallylgruppen in Butenylgruppen umgewandelt wird, welche eine deutlich verminderte Reaktivität für Additionsreaktionen zeigen. Polyoxyalkylenether mit end-

ständigen Propenylgruppen oder Butenylgruppen ergeben nach der Umsetzung mit Wasserstoffsiloxanen Siloxanoxyalkylencopolymere, deren Hydrolysierbarkeit bei niedrigen pH-Werten deutlich erhöht ist.

In der US-PS 3 507 923 ist ein Verfahren zur Herstellung von Polyoxyalkylenethern der Formel I beschrieben. Das Verfahren ist dadurch gekennzeichnet, daß man zunächst an Allyl- oder Methallylalkohol Alkylenoxid anlagert, das erhaltene Polyoxyalkylenmonool mit Alkalimetallmethylat in einem Dünnschichtverdampfer unter Abtrennen vom Methanol umsetzt, die so erhaltenen Alkalimetallsalze des Polyoxyalkylenmonools mit einem Chlorkohlenwasserstoff reagieren läßt und das sich dabei bildende Alkalihalogenid abtrennt.

Dieses Verfahren ist durch die Notwendigkeit der Verwendung eines Dünnschichtverdampfers aufwendig und in seinem Mengendurchsatz begrenzt. Wie sich aus den Beispielen ergibt, steigt bei größeren Ansätzen der Propenylgehalt um etwa 25 % an. Die Molekulargewichtsverteilung ist relativ breit.

Es ist ferner aus der DE-OS 24 27 681 ein Verfahren zur Herstellung eines Polyoxyalkylens mit Allylendgruppen bekannt, welches dadurch gekennzeichnet ist, daß man ein Alkylenoxidmonomeres in Gegenwart von Kaliumhydroxid in einer Menge von 2 bis 30 Mol-%, bezogen auf das Alkylenoxidmonomere, bei einer Polymerisationstemperatur von 20 bis 100°C 1 bis 40 Stunden lang unter Rühren einer Additionspolymerisation unterwirft und das polymerisierte Alkylenoxid mit einer Halogenallylverbindung in einer Menge von nicht weniger als 1 Mol auf 1 Mol einer Endgruppe des polymerisierten Alkylenoxids bei einer Reaktionstemperatur von 20 bis 100°C 10 Minuten bis 2 Stunden lang umsetzt, wobei das Kaliumhydroxid zum größten Teil in dem Polymerisationssystem dispergiert ist. In einer bevorzugten Ausführungsform verwendet man das Kaliumhydroxid in Kombination mit mindestens einem Initiator aus der Gruppe der Monohydroxyalkohole mit einer Allylgruppe, der Polyhydroxyalkohole, der Metalle der Gruppe Ia des periodischen Systems der Elemente und der Alkylatverbindungen eines Monohydroxyalkohols mit einer Allylgruppe oder der Verbindungen eines Polyhydroxyalkohols mit einem Metall der Gruppe Ia des periodischen Systems der Elemente, wobei der Initiator in einer Menge von nicht mehr als 3 Mol-%, bezogen auf das Alkylenoxid-

BAD ORIGINAL

0066179

monomere, verwendet wird.

Ziel des in der vorgenannten DE-OS beschriebenen Verfahrens ist es, insbesondere Polyoxyalkylene herzustellen, in denen sämtliche Endgruppen im wesentlichen Allylgruppen sind und ein vergleichsweise hohes Molekulargewicht aufweisen.

Als Nachteil dieses Verfahrens hat sich die Verwendung unterstöchiometrischer Mengen Kaliumhydroxid als Katalysator gezeigt. Die erhaltenen Verfahrensprodukte sind in bezug auf die Molekulargewichte relativ uneinheitlich. Dabei kann als Maß für diese Uneinheitlichkeit der Quotient aus $\bar{M}_w/\bar{M}_n$ gewählt werden, wobei $\bar{M}_n$ das numerische Molekulargewichtsmittel ist, welches z.B. durch die Bestimmung der Endgruppen (OH-Zahl-Bestimmung) festgestellt werden kann. Der Ausdruck $\bar{M}_w$ bezeichnet das Gewichtsmittel des Molekulargewichts, das man erhält, wenn man z.B. eine viskosimetrische Bestimmung des Molekulargewichts durchführt. Beide Werte der Molekulargewichtsmittel können auch durch eine gelchromatographische Untersuchung, deren Ergebnis eine Molekulargewichtsverteilungskurve ist, erhalten werden. Bei den Produkten der vorgenannten DE-OS beträgt dieser Quotient etwa 1,5 bis 1,6.

Die vorliegende Erfindung hat die Aufgabe, ein Verfahren zur Herstellung von Verbindungen der allgemeinen Formel

$$R^1O-[C_nH_{2n}O-]_xCH_2\overset{\overset{\displaystyle R^2}{|}}{C}=CH_2 \qquad \text{I}$$

wobei $R^1$, $R^2$, n und x die bereits angegebene Bedeutung haben,

zu finden, welches in einfacherer Weise abläuft, die Bildung von Propenyl- oder Butenylgruppen vermeidet und zu Polyoxyalkylenmonoallyl- oder -methallylethern führt, welche eine möglichst enge Molekulargewichtsverteilung aufweisen, und wobei insbesondere der Quotient $\bar{M}_w/\bar{M}_n < 1,5$, vorzugsweise 1,1 bis 1,2, ist.

Diese Aufgabe kann überraschenderweise dadurch gelöst werden, daß man zunächst Polyoxyalkylenether der Formel $R^1O-[C_nH_{2n}O-]_xM$ durch

stöchiometrische Polymerisation von Alkylenoxiden oder deren Gemischen der allgemeinen Formel $C_nH_{2n}O$ an Alkalialkoholate der allgemeinen Formel $MOR^1$, wobei M ein Alkalikation ist, bei Temperaturen von 60 bis 130°C, herstellt und dann dieses Zwischenprodukt mit einem Allylhalogenid oder Methallylhalogenid in an sich bekannter Weise umsetzt und das Verfahrensprodukt von dem als Nebenprodukt gebildeten Salz MX abtrennt.

In der ersten Verfahrensstufe wird zunächst in an sich bekannter Weise ein Alkylenoxid der Formel $C_nH_{2n}O$ an stöchiometrische Mengen eines Alkalialkoholates der Formel $MOR^1$ angelagert. Unter dem Begriff 'stöchiometrische Menge' ist die Menge Alkoholat zu verstehen, die der Menge der resultierenden Polyalkylenoxyketten äquivalent ist, so daß jede einzelne Kette durch ein Alkoxyanion gestartet wird und jede Kette ein Alkaliion aufweist.

Als Alkylenoxid verwendet man im allgemeinen Ethylenoxid und/oder Propylenoxid, wobei bei Verwendung beider Alkylenoxide die Anlagerung in statistischer Verteilung oder in Form von Blöcken möglich ist. Als Alkalialkoholate werden insbesondere die Alkoholate des Methanols bevorzugt. Es hat sich dabei herausgestellt, daß Natriumalkoholate besonders günstige Reaktionspartner darstellen.

Weitere geeignete Alkoholate der Formel $MOR^1$ sind solche, die sich von anderen niedrigen aliphatischen Alkoholen, wie Ethanol, Propanol, Butanol, i-Butanol oder von Phenol und seinen Derivaten oder von Benzylalkohol, herleiten.

Diese Reaktion verläuft in an sich bekannter Weise. Die Anlagerung von Alkylenoxiden an Alkalialkoholate ist bekannt und z.B. in der US-PS 2 782 240 beschrieben.

Es war jedoch überraschend, daß trotz der Verwendung hoher Mengen an Alkalialkoholaten die an sich bekannte und zu erwartende Isomerisierung von Propylenoxid in Allylalkohol nur in sehr geringem Maß stattfindet und die im ersten Verfahrensschritt erhaltenen Zwischenprodukte, wenn überhaupt, nur einen außerordentlich geringen Gehalt an Doppelbindungen aufweisen. Diese zu erwartende Isomerisierung des Propylenoxids wird

insbesondere dann weitgehend vermieden, wenn das Propylenoxid, gegebenenfalls im Gemisch mit Ethylenoxid, an Natriummethylat bei Temperaturen bis zu 100°C angelagert wird.

Die Reaktion erfolgt im allgemeinen in Gegenwart eines inerten Lösungsmittels, wie z.B. eines aromatischen oder aliphatischen Kohlenwasserstoffes. Als besonders brauchbar haben sich als aromatischer Kohlenwasserstoff Toluol und als aliphatischer Kohlenwasserstoff Hexan und Cyclohexan erwiesen. Das Alkalialkoholat wird in diesem Lösungsmittel mit geeigneten Rührvorrichtungen während der Reaktion mit dem Alkylenoxid fein verteilt. Es ist auch möglich, als Reaktionsmedium Polyoxyalkylenmonoallyl- oder -methallylether aus einem vorhergehenden Reaktionsansatz zu verwenden.

Das Verfahren wird unter Ausschluß von Luftfeuchtigkeit bei Temperaturen von 60 bis 130°C, gegebenenfalls unter Druck, durchgeführt. Ein bevorzugter Temperaturbereich ist 80 bis 100°C. Das Alkylenoxid wird in einem Autoklaven unter einem Druck von 4 bis 10 bar angelagert.

Die bei dem ersten Verfahrensschritt entstehenden Alkalisalze der Polyoxyalkylenmonoalkylether werden nun mit einem Allylhalogenid oder Methallylhalogenid umgesetzt. Bei dieser Verfahrensstufe empfiehlt sich ebenfalls die Verwendung eines Lösungsmittels. Es ist deshalb nicht notwendig, das Lösungsmittel nach der ersten Verfahrensstufe abzutrennen; es kann vielmehr im gleichen Ansatz weitergearbeitet werden. Die Reaktion ist exotherm, so daß sich die Zufuhr von Wärme erübrigt. Es ist sogar von Vorteil, die Reaktion bei Raumtemperatur oder mäßig erhöhter Temperatur zu beginnen, wobei sich nach Beginn der Reaktion die Temperatur des Reaktionsgemisches durch die freiwerdende Reaktionswärme erhöht. Sie soll den Siedepunkt des Allylchlorids (45°C) bzw. Methallylchlorids (72°C) nicht wesentlich überschreiten. Bei der Reaktion fällt das Salz MX, im Regelfall Natriumchlorid, aus und kann durch Filtration, zweckmäßig unter Zusatz eines Filterhilfsmittels, aus der Lösung entfernt werden. Nach der Filtration oder einem anderen Abtrennungsverfahren, wie z.B. einer Zentrifugation, wird das verwendete Lösungsmittel unter möglichst milden Bedingungen, gegebenenfalls unter Anlegen eines Vakuums, abgezogen.

Die Verfahrensprodukte haben einen vernachlässigbar geringen Gehalt an Propenyl- bzw. Butenylgruppen. Die Molekulargewichtsverteilung der einzelnen Polyoxyalkylenethermoleküle ist eng. Der Quotient $\bar{M}_w/\bar{M}_n$ liegt bei 1,1.

Verglichen mit dem Verfahren nach der US-PS 3 507 923 ist es von besonderem Vorteil, daß die Allyl- bzw. Methallylgruppe erst am Ende des Verfahrens in das Molekül eingeführt wird und unter den Bedingungen der Alkylenoxidanlagerung noch nicht anwesend ist. Bei dem erfindungsgemäßen Verfahren bilden sich offenbar im Schritt a) keine Polyoxyalkylendiole, wie dies als Möglichkeit in der US-PS 3 507 923 aufgeführt ist. Würden sich Diole oder Dialkoholate bilden, würden im Verfahrensschritt b) an beide Enden des Polyoxyalkylenmoleküls Alkenylgruppen angefügt, die bei der Umsetzung mit Wasserstoffsiloxan zu einer Vernetzung und durch die Vernetzung bedingt zu einer Vergelung führen müßten. Eine solche Vergelung konnte nicht beobachtet werden, so daß man auf die Abwesenheit oder einen vernachlässigbar geringen Anteil von solchen Dialkenylethern schließen kann.

Das erfindungsgemäße Verfahren wird durch die folgenden Beispiele noch näher erläutert.

Beispiel 1

A) Anlagerung von Ethylenoxid und Propylenoxid an Natriummethylat unter Bildung eines Blockcopolymeren

270 g (ca. 5 Mol) Natriummethylat werden in einem Reaktor mit einem zwangsfördernden Umlaufsystem und zusätzlichem Rührer in 1250 ml wasserfreiem Toluol dispergiert. Nach sorgfältiger Spülung mit Reinstickstoff wird auf 80°C geheizt und dann 2992 g (ca. 68 Mol) Ethylenoxid so schnell zugegeben, daß die Reaktorinnentemperatur einen Wert von 90°C und der Druck einen Wert von 3 bar nicht überschreiten. Nach vollständiger Einleitung des Alkylenoxid-Gemisches wird die Temperatur solange auf 85°C gehalten, bis ein gleichbleibender Druck das Ende der Nachreaktion anzeigt; danach werden nochmals 754 g (ca. 13 Mol) Propylenoxid unter den soeben beschriebenen Bedingungen angelagert. Anschließend wird bei 80 bis 90°C unter Vakuum die Entfernung der Restmonomeren vorgenommen.

Eine Probe des erhaltenen Produktes wird mit Hilfe von Phosphorsäure neutralisiert und nach Entfernung des entstandenen Natriumphosphats und des Wassers durch Destillation und Filtration mit einem Filterhilfsmittel analysiert: Die Hydroxylzahl beträgt 74, was bei einer angenommenen Funktionalität von 1 einem Molekulargewicht von 758 entspricht; die Jodzahl beträgt 0,8 und entspricht damit einem Gehalt von 2,4 Mol-% Doppelbindungen.

B) Umsetzung des Natriumpolyetheralkoholats mit Allylchlorid

1520 g (ca. 2 Mol) des unter A) erhaltenen Produktes werden mit 1500 ml wasserfreiem Toluol in einem Reaktor mit einer Rückflußkühlung und einer Rührvorrichtung unter Stickstoff vermischt; dazu werden bei Raumtemperatur 306 g (ca. 4 Mol) Allylchlorid zugetropft. Die Temperatur übersteigt während dieses Vorgangs einen Wert von 43 bis 45°C nicht. Danach wird bei 100°C nochmals für 3 h nachreagiert. Anschließend werden Toluol und überschüssiges Allylchlorid im Vakuum destillativ entfernt und das ausgefallene Kochsalz mit Hilfe eines Filterhilfsmittels abfiltriert.

Das erhaltene Produkt ist leicht getrübt und gelblich gefärbt. Die Jodzahl beträgt 29,7 und entspricht damit einem Gehalt von ca. 95 Mol-% Doppelbindungen; die Hydroxylzahl beträgt 7,7, womit noch 11 Mol-% OH-Gruppen im Polyether enthalten sind. Der für die Molekulargewichtsverteilung charakteristische Quotient $\bar{M}_w/\bar{M}_n$ wird durch die gelchromatographische Bestimmung zu 1,08 ermittelt; dies zeigt die enge Verteilung des Produktes. Das Infrarotspektrum zeigt die charakteristische Absorption der Allylgruppe bei 1640 $cm^{-1}$; die bei 1664 $cm^{-1}$ zu erwartende Absorption der Propenylgruppe konnte nicht festgestellt werden.

Bei der Anlagerung an ein Hydrosiloxan-Copolymer mit einer Platin-Verbindung als Katalysator trat keinerlei Vergelung als Folge der Anwesenheit von Diallylverbindungen auf. Das erhaltene Copolymer erwies sich als hochwirksamer PUR-Schaumstabilisator.

## Beispiel 2

### A) Anlagerung eines Ethylenoxid/Propylenoxid-Gemisches an Natriummethylat unter Bildung eines statistischen Copolymeren

Es wird verfahren wie in Beispiel 1 mit der Ausnahme, daß Ethylenoxid und Propylenoxid im Gemisch in etwa 10 Stufen derart angelagert werden, daß der Reaktorinnendruck nach jeder Zugabe einen konstanten Wert erreicht.

Eine mit Phosphorsäure neutralisierte Probe wird nach Entfernung von Natriumphosphat und Wasser analysiert. Die Hydroxylzahl beträgt 71, was bei einer angenommenen Funktionalität von 1 einem Molekulargewicht von 790 entspricht; die Jodzahl beträgt 0,7, was einem Gehalt von 2,2 Mol-% Doppelbindungen entspricht.

### B) Umsetzung des Natriumpolyetheralkoholats mit Methallylchlorid

Es wird verfahren wie in Beispiel 1 B), wobei zu 1580 g (ca. 2 Mol) des unter 2 A) erhaltenen Produktes 362 g (ca. 4 Mol) Methallylchlorid gegeben werden.

Das erhaltene Produkt ist leicht getrübt und gelblich gefärbt. Die Jodzahl beträgt 29,0, was einem Gehalt von ca. 96 Mol-% Doppelbindungen entspricht; die Hydroxylzahl beträgt 6,1, womit noch 9,1 Mol-% OH im Polyether enthalten sind. Der Verteilungskoeffizient ergibt sich zu 1,07.

Das Infrarotspektrum zeigt die charakteristische Absorption der Methallylgruppe bei 1660 $cm^{-1}$; die bei 1680 - 1685 $cm^{-1}$ zu erwartende Absorption der Butenylgruppe konnte nicht festgestellt werden.

0066178

Patentansprüche:

1. Verfahren zur Herstellung von Polyoxyalkylenmonoallyl- oder -methallylethern der allgemeinen Formel

$$R^1O-[C_nH_{2n}O-]_xCH_2\overset{\overset{\displaystyle R^2}{|}}{C}=CH_2$$

wobei $R^1$ ein Alkylrest mit 1 bis 4 Kohlenstoffatomen, ein Arylrest oder ein Alkarylrest,
$R^2$ ein Wasserstoff- oder Methylrest,
n eine beliebige Zahl von 2 bis 3 und
x eine ganze Zahl ist,

mit enger Molekulargewichtsverteilung, dadurch gekennzeichnet, daß man zunächst Polyoxyalkylenether der Formel $R^1O-[C_nH_{2n}O-]_xM$ durch stöchiometrische Polymerisation von Alkylenoxiden oder deren Gemischen der allgemeinen Formel $C_nH_{2n}O$ an Alkalialkoholate der allgemeinen Formel $MOR^1$, wobei M ein Alkalikation ist, bei Temperaturen von 60 bis 130°C, herstellt und dann dieses Zwischenprodukt mit einem Allyl- oder Methallylhalogenid in an sich bekannter Weise umsetzt und das Verfahrensprodukt von dem als Nebenprodukt gebildeten Salz MX abtrennt.

2. Verfahren nach Anspruch 1, dadurch gekennzeichnet, daß man als Alkalialkoholat Natriumalkoholat verwendet.

3. Verfahren nach Anspruch 2, dadurch gekennzeichnet, daß man als Natriumalkoholat Natriummethylat verwendet.

4. Verfahren nach einem oder mehreren der vorhergehenden Ansprüche, dadurch gekennzeichnet, daß man als Alkenylhalogenid Allylchlorid oder Methallylchlorid verwendet.

5. Verfahren nach einem oder mehreren der vorhergehenden Ansprüche, dadurch gekennzeichnet, daß man das Verfahren in einem gegenüber

MOR[1] und Alkylenoxid inerten Lösungsmittel durchführt.

6. Verfahren nach Anspruch 5, dadurch gekennzeichnet, daß man das Verfahren in einem aromatischen oder aliphatischen Kohlenwasserstoff als Verdünnungsmittel durchführt.

7. Verfahren nach Anspruch 6, dadurch gekennzeichnet, daß man das Verfahren in Toluol durchführt.

8. Verfahren nach Anspruch 6, dadurch gekennzeichnet, daß man das Verfahren in n-Hexan durchführt.

9. Verfahren nach einem oder mehreren der vorhergehenden Ansprüche, dadurch gekennzeichnet, daß man die Anlagerung der Alkylenoxide oder ihrer Gemische an die Alkalialkoholate bei Temperaturen von 80 bis 100°C durchführt.

0066179

Nummer der Anmeldung

Europäisches Patentamt

# EUROPÄISCHER RECHERCHENBERICHT

EP 82104339.5

| EINSCHLÄGIGE DOKUMENTE | | | KLASSIFIKATION DER ANMELDUNG (Int Cl.3) |
|---|---|---|---|
| Kategorie | Kennzeichnung des Dokuments mit Angabe, soweit erforderlich, der maßgeblichen Teile | betrifft Anspruch | |
| Y,D | US - A - 2 782 240 (R. HEFNER et al.)<br>* Gesamt, insbesondere Ansprüche 8,14; Spalte 2, Zeilen 44,45; Spalte 2, Zeile 63 - Spalte 3, Zeile 5; Beispiele *<br>-- | 1-3,5-9 | C 08 G 65/28<br>C 08 G 65/32 |
| Y | FR - A - 1 541 982 (IMPERIAL CHEMICAL INDUSTRIES LIMITED)<br>* Seite 1, linke Spalte, letzter Absatz, rechte Spalte, erster Absatz; Beispiele 1, 5-7, 9 *<br>---- | 1,4 | |
| | | | RECHERCHIERTE SACHGEBIETE (Int Cl.3) |
| | | | C 08 G 65/00 |
| | | | KATEGORIE DER GENANNTEN DOKUMENTE<br>X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze<br>E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 14-07-1982 | KALTENEGGER |

EPA form 1503.1 06.78